(19) Europäisches Patentamt / European Patent Office / Office européen des brevets

(11) EP 3 718 846 A1

(12) EUROPEAN PATENT APPLICATION
published in accordance with Art. 153(4) EPC

(43) Date of publication:
07.10.2020 Bulletin 2020/41

(51) Int Cl.:
B60W 30/14 (2006.01)     B60W 10/08 (2006.01)

(21) Application number: 18884309.8

(22) Date of filing: 19.11.2018

(86) International application number:
PCT/CN2018/116101

(87) International publication number:
WO 2019/105247 (06.06.2019 Gazette 2019/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.11.2017 CN 201711213249

(71) Applicant: Nio Nextev Limited
Hong Kong (CN)

(72) Inventor: CUI, Ting
Hong Kong (CN)

(74) Representative: Vossius & Partner
Patentanwälte Rechtsanwälte mbB
Siebertstrasse 3
81675 München (DE)

(54) CRUISE CONTROL METHOD AND SYSTEM FOR ELECTRIC VEHICLE, VEHICLE, CONTROLLER, AND STORAGE MEDIUM

(57)     Disclosed are a cruise control method and system for an electric vehicle, a vehicle, a controller and a storage medium. The method comprises the steps of: receiving a cruise start request or a cruise resume request, the cruise start request comprising a target cruise speed $V_1$; if the vehicle meets set cruise conditions, detecting a current vehicle speed V, and setting an intermediate vehicle speed $V_2$ that is numerically between the target cruise speed $V_1$ and the current vehicle speed V, then calculating a difference between the current vehicle speed V and the intermediate vehicle speed $V_2$, and obtaining a final cruise torque based on the difference and a set initial torque; and adjusting a motor output torque of the electric vehicle according to the final cruise torque so as to propel the vehicle to cruise. The application of the cruise control method and system for an electric vehicle can effectively prevent a cruise control torque from fluctuating, thus ensuring a smoother cruising of the vehicle and improving the driving experience of users.

Start — S10

Receive a cruise start request or a cruise resume request — S11

Detect a current vehicle speed V, set an intermediate vehicle speed V2, calculate a difference between V and V2, and obtain a final cruise torque based on the difference and a set initial torque — S12

Adjust a motor output torque according to the final cruise torque — S13

Fig. 1

# Description

## Technical Field

The invention relates to the technical field of automobiles, and in particular to a cruise control method for an electric vehicle, a cruise control system for an electric vehicle, a vehicle, a controller and a storage medium.

## Background Art

Cruise control is a vehicle feature where a user activates a cruise function by operating a cruise control switch in order to release the accelerator pedal and keep the vehicle travelling at a certain speed. Cruise control, as a basic vehicle feature, has basically matured in traditional gasoline vehicles. With the progress of science and technology and development of the society, many types of new energy vehicles, such as electric vehicles and hybrid vehicles, are increasingly widely used. Cruise control research for such vehicles has attracted much attention in recent years.

At the start of the cruise control, an accelerator torque is used to maintain an initial torque of a target cruise speed. During the cruise control, a vehicle control unit (VCU) monitors the current vehicle speed in real time, and performs feedback control on a motor output torque according to a difference between the current vehicle speed and a target cruise speed. By continuously adjusting the motor torque, the current vehicle speed is adjusted to the target cruise speed.

However, there are many factors in practical application that will affect the use effect of vehicle cruise control, especially the existing cruise control method cannot ensure that the vehicle speed is kept stable at the target cruise speed, which can hardly provide users with satisfied driving experience. For example, using an accelerator torque as the initial torque of the cruise torque will cause the vehicle speed to continue to increase in the case of entering cruise control during acceleration; the changes in road slope will cause severe changes in the cruise torque, thus affecting the smoothness of the torque output; when the vehicle saves the cruising speed after stopping cruising and resumes cruising at a low speed, the vehicle will accelerate sharply; and when a motor torque is requested in cruise control, if a cruise PID control torque is adjusted according to the target torque, it is easy to cause vehicle shakes. Therefore, it is quite necessary to further improve the existing cruise control mode to effectively deal with motor torque changes.

## Summary of the Invention

In view of this, the invention provides a cruise control method for an electric vehicle, a cruise control system for an electric vehicle, a vehicle, a controller and a storage medium, thereby effectively solving the above-mentioned problems and problems in other aspects in the prior art.

Firstly, according to a first aspect of the invention, there is provided a cruise control method for an electric vehicle, comprising the steps of:

> A. receiving a cruise start request or a cruise resume request, the cruise start request comprising a target cruise speed $V_1$;
> B. if the vehicle meets set cruise conditions, detecting a current vehicle speed V, and setting an intermediate vehicle speed $V_2$ that is numerically between the target cruise speed $V_1$ and the current vehicle speed V, then calculating a difference between the current vehicle speed V and the intermediate vehicle speed $V_2$, and obtaining a final cruise torque based on the difference and a set initial torque; and
> C. adjusting a motor output torque of the electric vehicle according to the final cruise torque so as to propel the vehicle to cruise.

In the cruise control method for an electric vehicle according to the invention, optionally, in step B: if the current vehicle speed V is less than the target cruise speed $V_1$, the intermediate vehicle speed is set as $V_2 = \min[V_1, V + K_1{}^*(V_1-V)]$, wherein $K_1$ is a vehicle speed gradient parameter; and if the current vehicle speed V is greater than the target cruise speed $V_1$, the intermediate vehicle speed is set as $V_2 = \max[V_1, V-K_2{}^*(V_1-V)]$, wherein $K_2$ is a vehicle speed gradient parameter and is equal to or not equal to $K_1$.

In the cruise control method for an electric vehicle according to the invention, optionally, in step B, the final cruise torque is obtained through PID control, which comprises:

> setting a PID initial torque, a PID speed deviation and a PID limit torque, wherein the initial torque and the difference are taken as the PID initial torque and the PID speed deviation, respectively; and
> performing the PID control based on the PID initial torque, the PID speed deviation and the PID limit torque to obtain a cruise torque; and
> selecting the larger of the obtained cruise torque and a driver requested torque as the final cruise torque.

In the cruise control method for an electric vehicle according to the invention, optionally, the smaller of the driver requested torque and a vehicle coasting load is selected as the PID initial torque, wherein the driver requested torque is obtained according to the current vehicle speed and an accelerator pedal signal, and the vehicle coasting load refers to the load when the vehicle maintains a vehicle propulsion force and a driving resistance to reach a dynamic balance of the vehicle at a preset constant vehicle speed on a straight level road under a windless condition; and/or

the PID limit torque is obtained at the start of the cruise according to a difference between the current vehicle speed V and the target cruise speed $V_1$, and is obtained during the cruise according to the difference between the current vehicle speed V and the target cruise speed $V_1$, a current torque of a motor of the electric vehicle, and the obtained cruise torque.

In the cruise control method for an electric vehicle according to the invention, optionally, if the absolute value of the difference between the current vehicle speed V and the target cruise speed $V_1$ is greater than a preset threshold, a corresponding external characteristic torque of the motor is obtained according to an external characteristic curve of the motor of the electric vehicle as the PID limit torque, and if the absolute value of the difference between the current vehicle speed V and the target cruise speed $V_1$ is less than the preset threshold, the obtained cruise torque is taken as the PID limit torque.

In the cruise control method for an electric vehicle according to the invention, optionally, the preset threshold is not greater than 5.

In the cruise control method for an electric vehicle according to the invention, optionally, the cruise control method for an electric vehicle further comprises: modifying the PID initial torque and/or the PID limit torque so as to cause same to conform to the characteristics of the motor of the electric vehicle.

Secondly, according to a second aspect of the invention, there is also provided a cruise control system for an electric vehicle, the system comprising:

a first unit configured to receive a cruise start request or a cruise resume request, the cruise start request comprising a target cruise speed $V_1$;
a second unit configured to: determine whether the vehicle meets set cruise conditions, and if the condition is met, detect a current vehicle speed V, and set an intermediate vehicle speed $V_2$ that is numerically between the target cruise speed $V_1$ and the current vehicle speed V, then calculate a difference between the current vehicle speed V and the intermediate vehicle speed $V_2$, and obtain a final cruise torque based on the difference and a set initial torque; and
a third unit configured to adjust a motor output torque of the electric vehicle according to the final cruise torque so as to propel the vehicle to cruise.

In the cruise control system for an electric vehicle according to the invention, optionally, the second unit is further configured to: set the intermediate vehicle speed as $V_2 = \min[V_1, V + K_1*(V_1-V)]$ if the current vehicle speed V is less than the target cruise speed $V_1$, wherein $K_1$ is a vehicle speed gradient parameter; and set the intermediate vehicle speed as $V_2 = \max[V_1, V-K_2*(V_1-V)]$ if the current vehicle speed V is greater than the target cruise speed $V_1$, wherein $K_2$ is a vehicle speed gradient parameter and is equal to or not equal to $K_1$.

In the cruise control system for an electric vehicle according to the invention, optionally, the cruise control system further comprises a PID controller configured to perform PID control to output a cruise torque based on a PID initial torque, a PID speed deviation and a PID limit torque, wherein the initial torque and the difference are taken as the PID initial torque and the PID speed deviation, respectively, and that the second unit is further configured to select the larger of the cruise torque output from the PID controller and a driver requested torque as the final cruise torque.

In the cruise control system for an electric vehicle according to the invention, optionally, the smaller of the driver requested torque and a vehicle coasting load is selected as the PID initial torque, wherein the driver requested torque is obtained according to the current vehicle speed and an accelerator pedal signal, and the vehicle coasting load refers to the load when the vehicle maintains a vehicle propulsion force and a driving resistance to reach a dynamic balance of the vehicle at a preset constant vehicle speed on a straight level road under a windless condition; and/or
the PID limit torque is obtained at the start of the cruise according to a difference between the current vehicle speed V and the target cruise speed $V_1$, and is obtained during the cruise according to the difference between the current vehicle speed V and the target cruise speed $V_1$, a current torque of a motor of the electric vehicle, and the obtained cruise torque.

In the cruise control system for an electric vehicle according to the invention, optionally, if the absolute value of the difference between the current vehicle speed V and the target cruise speed $V_1$ is greater than a preset threshold, a corresponding external characteristic torque of the motor is obtained according to an external characteristic curve of the motor of the electric vehicle as the PID limit torque, and if the absolute value of the difference between the current vehicle speed V and the target cruise speed $V_1$ is less than the preset threshold, the obtained cruise torque is taken as the PID limit torque.

In the cruise control system for an electric vehicle according to the invention, optionally, the first unit is a cruise switch, and/or the second unit is a vehicle control unit (VCU), and/or the third unit is a power electronics unit (PEU).

Furthermore, according to a third aspect of the invention, there is also provided a vehicle, which is provided with a cruise control system for an electric vehicle as described in any one of the above, the vehicle including pure electric vehicles and hybrid vehicles.

In addition, according to a fourth aspect of the invention, there is also provided a controller comprising a processor and a memory for storing instructions, which, when executed, enable the processor to implement a cruise control method for an electric vehicle as described in any one of the above.

In addition, according to a fifth aspect of the invention, there is also provided a storage medium for storing instructions which, when executed, implement a cruise control method for an electric vehicle as described in any one of the above.

The invention innovatively provides a cruise control solution for an electric vehicle, which enables the vehicle to cruise more smoothly through accurate real-time adjustment of an motor torque output, and in particular can ensure that the cruise control torque does not fluctuate, thereby effectively avoiding adverse effects such as acceleration of the vehicle caused by releasing the accelerator pedal after setting a cruise speed during vehicle acceleration, and sharp acceleration or sharp deceleration when the vehicle speed resumes cruise from a low speed or a high speed after stopping the cruise, and eliminating the problems of severe cruise torque changes, vehicle shakes, large vehicle impacts, etc. existing in the current cruise control. In addition, using the optimized and improved cruise torque control solution according to the invention can also significantly reduce the workload of vehicle calibration and further improve the driving experience of users.

**Brief Description of the Drawings**

The technical solution of the invention will be further described in detail below with reference to accompanying drawings and embodiments. However, it should be understood that these accompanying drawings are designed for the purpose of illustration only and therefore are not intended to limit the scope of the invention. Moreover, unless indicated specifically, these drawings are merely intended to describe the structure construction or step flow described herein conceptually.

Fig. 1 is a basic flow diagram of an embodiment of a cruise control method for an electric vehicle according to the invention.
Fig. 2 is a processing logic diagram of another embodiment of the cruise control method for an electric vehicle according to the invention.
Fig. 3 is a schematic diagram of constitution of an embodiment of a cruise control system for an electric vehicle according to the invention.

**Detailed Description of Embodiments**

First of all, it should be noted that the steps, constitution, features, advantages, etc. of a cruise control method for an electric vehicle, a cruise control system for an electric vehicle, a vehicle, a controller, and a storage medium according to the invention will be described in detail below by way of example. However, all the descriptions are for the purpose of illustration only and should not be construed as limiting the invention in any way.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. In addition, it should also be noted that the technical term "electric vehicle" used herein includes but is not limited to pure electric vehicles, hybrid vehicles, etc.

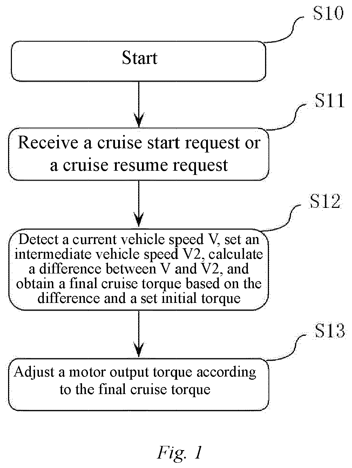

A basic workflow of an embodiment of a cruise control method for an electric vehicle according to the invention is exemplarily provided in Fig. 1. As shown in Fig. 1, an example of the cruise control method for an electric vehicle comprises the following steps.

First, the method starts from step S10, and then a cruise start request (which includes a target cruise speed $V_1$) or a cruise resume request is received in step S11. Generally speaking, in practical applications, the above-mentioned cruise start request or cruise resume request is generally issued by a driver of the vehicle by operating a cruise system installed in the vehicle according to driving needs. For example, when the driver presses a cruise start key and a Set key, the cruise start request is sent out; and when the driver applies the brake or presses a Cancel key, the electric vehicle will exit the cruise state, but the cruise system is not turned off at this time, and once the driver presses a Resume key, a cruise resume request will be sent, so that the electric vehicle can enter the cruise state again.

Secondly, in step S12, after receiving the cruise start request or the cruise resume request, if the vehicle meets set cruise conditions (e.g., an accelerator pedal position signal, a brake pedal position signal, a gear signal, a vehicle speed signal, a high-voltage state of the vehicle, etc.), a current vehicle speed V is detected and acquired, and then an intermediate vehicle speed $V_2$ is set according to a target cruise speed $V_1$ and the current vehicle speed V. The intermediate vehicle speed $V_2$ can select any suitable speed value numerically between the target cruise speed $V_1$ and the current vehicle speed V, which is based on the consideration of the invention that the motor output torque can be controlled more effectively, smoothly and accurately, thus ensuring that the cruise control torque will not fluctuate. It must be noted that on this point, the invention proposes an innovative idea completely different from the prior art, i.e. the traditional solution only focuses on the relationship between the current vehicle speed and the target cruise speed in the cruise control generally, but unlike this, the invention overcomes the inertial thinking of the industry in this aspect. By setting the above-mentioned intermediate vehicle speed $V_2$ as an intermediate transition between the target cruise speed $V_1$ and the current vehicle speed V, the speed difference span therebetween can be effectively reduced, so that the vehicle can be caused to approach continuously from the current vehicle speed and finally reach the target cruise speed with a more gradual change gradient. During this process, the motor output torque of the electric vehicle can be adjusted in real time in a smoother way, thus achieving a remarkable technical effect that the cruise control torque will not fluctuate.

As an example, in an optional case, if the current vehicle speed V is less than the target cruise speed $V_1$, the above-mentioned intermediate vehicle speed may be set as:

$$V_2 = min[V_1, V + K_1*(V_1-V)]$$

which means that the intermediate vehicle speed $V_2$ will increase with a certain gradient (i.e. gradient limit) on the basis of the current vehicle speed V until the intermediate vehicle speed $V_2$ reaches the target cruise speed $V_1$. $K_1$ in the above expression is a vehicle speed gradient parameter. The closer the current vehicle speed V is to the target cruise speed $V_1$, the smaller the value of $K_1$ is. The vehicle speed gradient parameter can be derived from experimental test data or can be selected and set according to specific applications. If the current vehicle speed V is greater than the target cruise speed $V_1$, the above-mentioned intermediate vehicle speed can be set according to the following expression:

$$V_2 = max[V_1, V-K_2*(V_1-V)]$$

which means that the intermediate vehicle speed $V_2$ will decrease with a certain gradient (i.e. gradient limit) on the basis of the current vehicle speed V until the intermediate vehicle speed $V_2$ reaches the target cruise speed $V_1$. $K_2$ in the above expression is a vehicle speed gradient parameter. The closer the current vehicle speed V is to the target cruise speed $V_1$, the smaller the value of $K_2$ is. Also, it can be derived from experimental test data or can be selected and set according to specific applications. With regard to the above two vehicle speed gradient parameters $K_1$ and $K_2$, they may be equal or unequal to each other.

It can be understood that, in addition to the above exemplary distance description, any other suitable way to select and set the intermediate vehicle speed $V_2$ between the target cruise speed $V_1$ and the current vehicle speed V is completely allowed in the solution of the invention.

After setting the intermediate vehicle speed $V_2$, the difference between the current vehicle speed V and the intermediate vehicle speed $V_2$ is calculated, and then the final cruise torque T is obtained according to the difference and a set initial torque. The initial torque will be described in detail hereinafter, but it should be understood that the invention also allows a data storage table formed based on a large amount of measured data and/or user usage data to directly provide an appropriate initial torque matching the current operation condition of the electric vehicle, or allows an initial torque provided by calculation in any other suitable manner.

Subsequently, in step S13, the motor output torque of the electric vehicle can be adjusted according to the obtained final cruise torque T, so as to propel the vehicle to cruise with the motor output torque adjusted in real time, thus effectively avoiding the problems of severe changes of the cruise torque, large impacts on the vehicle, etc. at the start of the cruise and during the cruise, making the vehicle travel more smoothly and improving the driving experience of users.

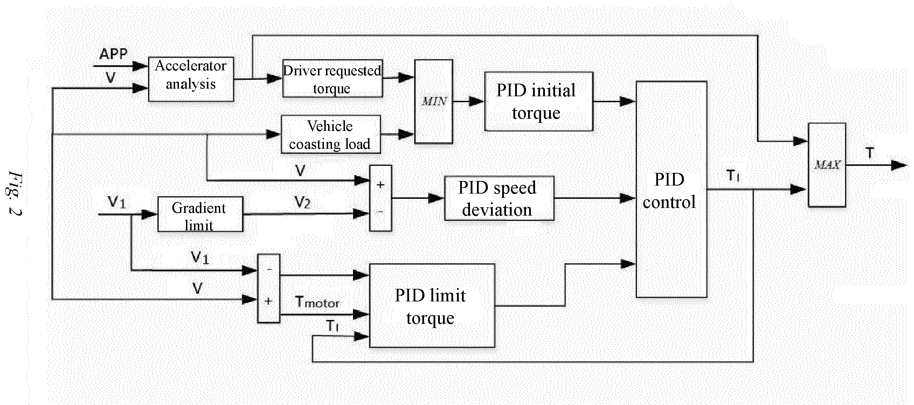

For example, in the invention, a PID (proportional-integral-derivative) control mode can be optionally adopted to calculate a cruise torque $T_1$, and then the larger of the cruise torque $T_1$ and the driver requested torque is taken as the final cruise torque T. Specifically, for example, please refer to the embodiment shown in Fig. 2, which shows the processing logic process in which PID control is adopted. As shown in Fig. 2, the input items of the PID control include a PID speed deviation, a PID initial torque and a PID limit torque. The PID speed deviation may correspond to the calculated difference between the current vehicle speed V and the intermediate vehicle speed $V_2$ described above for controlling the cruise torque change rate, and the PID initial torque may correspond to the initial torque described above, while the PID limit torque is provided to further optimize the cruise torque $T_1$ output through PID control so as to make the torque output more stable. The following is an exemplary explanation specifically for the above.

With regard to the PID initial torque, the smaller of the driver requested torque and the vehicle coasting load can be optionally taken as the PID initial torque in the invention. Since when the cruise feature is activated, for example, during acceleration, the accelerator torque at this time may be greater than the cruise control torque that keeps the vehicle travelling at the target cruise speed, it is very likely to cause acceleration of the vehicle at the very beginning of the cruise, and thus such problems can be avoided by providing the PID initial torque. With regard to the above-mentioned driver requested torque, it can be obtained by performing accelerator analysis according to the current vehicle speed V and an accelerator pedal position signal APP. With regard to the above-mentioned vehicle coasting load, it reflects the relationship between the vehicle speed and the vehicle driving resistance, i.e. the vehicle coasting load refers to the load when the vehicle maintains a vehicle propulsion force and a driving resistance to reach a dynamic balance of the vehicle at a preset constant vehicle speed on a straight level road under a windless condition. With the increase of the vehicle speed, the driving resistance of the vehicle will increase, i.e. the vehicle coasting load will also increase.

With regard to the PID limit torque, at the start of the cruise, it can be obtained according to a difference between the current vehicle speed V and the target cruise speed $V_1$, whereas during the cruise, it can be obtained according to the difference between the current vehicle speed V and the target cruise speed $V_1$, a current torque

of a motor of the electric vehicle $T_{motor}$, and the cruise torque $T_1$. For example, if the absolute value of the difference between the current vehicle speed V and the target cruise speed $V_1$ is greater than a preset threshold (for example, the preset threshold is no greater than 5 or other suitable values), it indicates that the cruise torque $T_1$ output through the PID control still needs a period of control process to reach the target cruise speed $V_1$. At this time, a corresponding external characteristic torque of the motor can be obtained according to an external characteristic curve of the motor of the electric vehicle, so that external characteristic torque of the motor is taken as the PID limit torque. As another example, if the absolute value of the difference between the current vehicle speed V and the target cruise speed $V_1$ is less than the preset threshold, it indicates that the cruise torque $T_1$ output through the PID control has been able to substantially reach the target cruise speed $V_1$. Therefore, at this time, the cruise torque $T_1$ can be directly used as the PID limit torque for further PID control calculation, so that adverse effects, such as cruise torque jitter due to changes in road slope, in the cruise control can be avoided effectively.

In addition, it should also be noted that in the method of the invention, it is also considered that under alternative circumstances, further correction processing (e.g., reduction of the torque change rate) can be carried out on the PID initial torque and/or PID limit torque so as to cause same to fully conform to the characteristics of the motor of the electric vehicle. This is because, for example, the calculated or selected PID initial torque and/or PID limit torque may deviate from the allowable characteristics of the motor itself (e.g., an upper limit of motor power and limit of motor speed range). Therefore, it is considerable to correct the set PID initial torque and/or PID limit torque to avoid possible damage to the motor of the electric vehicle.

The cruise control method for an electric vehicle of the invention has been described in illustrative detail above, and the cruise control solution of the invention will be further explained below by a specific example so that the principle of the invention and its technical advantages can be more clearly understood.

Assuming that the electric vehicle enters a preset speed range, the preset speed range varies depending on different vehicle parameters. When the driver presses a cruise activation key On to try to start the cruise system and presses the cruise speed Set key, the cruise start request is sent and the current vehicle speed V is set as the target cruise speed. If the current vehicle speed V is 80 km/h, and the driver requested torque is 100 Nm and the vehicle coasting load corresponding to the current vehicle speed V is 20 Nm according to an analysis based on the accelerator pedal signal and the current vehicle speed V, then the PID initial torque can be set to 20 Nm. At the same time, since the current vehicle speed V is the target cruise speed $V_1$ and the absolute value of the difference between the current vehicle speed V and the target cruise speed $V_1$ is less than the preset threshold, the cruise torque $T_1$ output through the PID control can be taken as the PID limit torque.

If the driver presses the Cancel key or applies the brake, the cruise torque will cease and the vehicle speed will be reduced from 80 km/h to 30 km/h due to the driving resistance, for example, but still in the preset speed range. Subsequently, if the driver presses the Resume key and an intermediate vehicle speed $V_2$ is set to 40 km/h, for example, in order to reduce the cruise torque fluctuation according to the solution of the invention, the intermediate vehicle speed $V_2$ will increase in a certain gradient from 40 km/h until it is equal to the target cruise speed $V_1$. During this period, the PID control will adjust and control the output torque of the motor in real time according to the difference between the current vehicle speed V and the intermediate vehicle speed $V_2$ to ensure that the cruise control torque will not fluctuate or be subjected to other adverse effects.

When the vehicle has reached the target cruise speed $V_1$, under the condition that the driver has an overtaking intention, when the driver depresses the accelerator, the vehicle speed will exceed the target cruise speed $V_1$, for example, reaching 100 km/h. If at this time the accelerator is released and a set intermediate vehicle speed $V_2$ is set to 90 km/h, for example, in order to reduce the cruise torque fluctuation according to the solution of the invention, the intermediate vehicle speed $V_2$ will decrease in a certain gradient from 90 km/h until it is equal to the target cruise speed $V_1$. During this period, the PID control will also adjust and control the output torque of the motor in real time according to the difference between the current vehicle speed V and the intermediate vehicle speed $V_2$ to ensure that the cruise control torque will not fluctuate or be subjected to other adverse effects.

In addition, according to another technical solution of the invention, there is also provided a cruise control system for an electric vehicle. The cruise control system for an electric vehicle is configured to execute the cruise control method for an electric vehicle according to the invention in any suitable form such as hardware, software or a combination thereof, so as to be able to fully utilize the above-mentioned features and advantages of the invention which are significantly superior to the prior art.

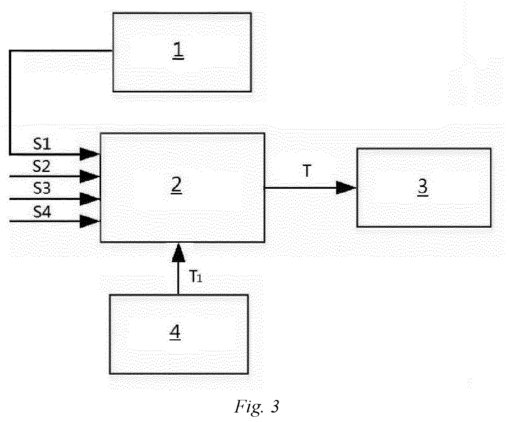

As an example, as shown in the embodiment given in Fig. 3, a first unit 1, a second unit 2, a third unit 3 and an optional PID controller 4 are provided in the example of the cruise control system for an electric vehicle.

Specifically, with regard to the first unit 1, it is configured to receive a cruise start request or a cruise resume request, wherein the cruise start request comprises a target cruise speed $V_1$. In practical applications, the above-mentioned first unit 1 may be a cruise switch, and such a cruise switch signal may be used to start the cruise control feature of the vehicle, set the current vehicle speed V as the target cruise speed $V_1$, resume the

cruise control, set the target cruise speed $V_1$, etc. Of course, the above-mentioned first unit 1 may also be implemented in any suitable form such as hardware, software or a combination thereof.

With regard to the second unit 2, it is configured to: determine whether the vehicle meets set cruise conditions, and if the conditions are met, detect the current vehicle speed V, and set the above-mentioned intermediate vehicle speed $V_2$ according to the target cruise speed $V_1$ and the current vehicle speed V, then calculate the difference between the current vehicle speed V and the intermediate vehicle speed $V_2$, and obtain the final cruise torque based on the difference and a set initial torque. In an alternative case, the second unit 2 is further configured to: set the intermediate vehicle speed as $V_2 = \min[V_1, V + K_1*(V_1-V)]$ if the current vehicle speed V is less than the target cruise speed $V_1$, and set the intermediate vehicle speed as $V_2 = \max[V_1, V-K_2*(V_1-V)]$ if the current vehicle speed V is greater than the target cruise speed $V_1$. In addition, the second unit 2 may be optionally configured to select the larger of the cruise torque $T_1$ output from the PID controller 4 and a driver requested torque as the final cruise torque T. For the specific meanings, settings and other aspects of the above-mentioned various parameters, the detailed descriptions of relevant sections in the previous part herein can be refer to, which will not be repeated here. In specific applications, the function of the second unit 2 can be realized by setting a vehicle control unit (VCU) in the vehicle. For example, as shown in Fig. 3, the vehicle control unit, as a key component of the cruise control feature, can realize the functions of interaction between users and the cruise control feature, determination of cruise control entering conditions, monitoring of cruise torque changes, etc. by receiving a signal S1 obtained from the first unit 1, an accelerator pedal position signal S2, a brake pedal signal S3, a vehicle speed signal S4 and other possible signals, for example. It should be noted that the above-mentioned second unit 2 is also allowed to be implemented in any suitable form such as hardware, software or a combination thereof.

With regard to the third unit 3, it is configured to adjust the motor output torque of the electric vehicle according to the final cruise torque provided by the second unit 2 to propel the vehicle to cruise. In practical application, the third unit 3 can be a power electronics unit (PEU). It is to be understood that the above-mentioned third unit 3 can similarly be implemented in any suitable form such as hardware, software or a combination thereof.

With regard to the PID controller 4, it is configured to perform the PID control based on the PID initial torque, the PID speed deviation, and the PID limit torque so as to output the cruise torque $T_1$. Since a very detailed explanation has been given in the foregoing for many aspects, such as the PID initial torque, the PID limit torque, the PID speed deviation, the driver requested torque and the vehicle coasting load in the technical solution according to the invention, the PID control by the PID controller 4 can be selected and configured with reference to the foregoing and will not be repeated herein.

In addition, according to yet another technical solution of the invention, there is also provided a vehicle configured with a cruise control system for an electric vehicle designed and provided according to the invention, so that compared with the prior art, the cruise start, cruise resume and torque control during the cruise of the electric vehicle can be more favorably realized, and the obvious technical advantages as mentioned above provided by the solution of the invention are brought into play. The vehicle provided according to the invention includes but is not limited to pure electric vehicles, hybrid vehicles, etc.

In addition, the invention also provides a controller, which comprises a processor and a memory, wherein the memory is used for storing instructions, and when the instructions are executed, the processor realizes the cruise control method for an electric vehicle according to the invention as exemplarily described above in conjunction with Figs. 1 and 2. In a specific embodiment, the controller may be provided in a vehicle or in other devices that can implement the method and the intention of the invention.

Finally, the invention also provides a storage medium for storing instructions that, when executed, are used to implement, for example, the cruise control method for an electric vehicle according to the invention as exemplarily described above in conjunction with Figs. 1 and 2.

The cruise control method for an electric vehicle, the cruise control system for an electric vehicle, the vehicle, the controller, and the storage medium according to the invention have been described above in detail by way of example only. These examples are for the purpose of illustrating the principle of the invention and the implementations thereof only, rather than limiting the invention. Those skilled in the art can make various variations and improvements without departing from the spirit and scope of the invention. There is no doubt that as the prior art has provided a large number of calculation methods and processing means in obtaining various operating parameters related to the vehicle (including the following operating parameters) based on operating parameters such as the vehicle speed (e.g., the current vehicle speed, the target cruise speed, and the difference between the current vehicle speed and the target cruise speed), the cruise demand torque, the cruise torque, and the motor output torque, these prior art are all allowed and can be used by the invention, so it is not necessary to detail them herein. For example, a PID control technology is adopted in the previous embodiments, however, the invention also needs to use any one or more other suitable control methods, so it is not necessary to adopt PID control steps or provide a PID controller in the technical solution of the invention. As another example, although the larger of the driver requested torque and the obtained cruise torque is selected as the final cruise torque, and the smaller of the driver requested torque and the vehicle coasting load is selected as the initial torque in cruise control in the given examples, it should be understood that the cruise torque or the driver requested torque can be directly used as the final cruise torque, and also, the smaller of the driver requested torque and the vehicle coasting load can be directly used as the initial torque. Therefore, all equivalent technical solutions should fall within the scope of the invention and be defined by the claims of the invention.

**Claims**

1. A cruise control method for an electric vehicle, **characterized by** comprising the steps of:

   A. receiving a cruise start request or a cruise resume request, the cruise start request comprising a target cruise speed $V_1$;
   B. if the vehicle meets set cruise conditions, detecting a current vehicle speed V, and setting an intermediate vehicle speed $V_2$ that is numerically between the target cruise speed $V_1$ and the current vehicle speed V, then calculating a difference between the current vehicle speed V and the intermediate vehicle speed $V_2$, and obtaining a final cruise torque based on the difference and a set initial torque; and
   C. adjusting a motor output torque of the electric vehicle according to the final cruise torque so as to propel the vehicle to cruise.

2. The cruise control method for an electric vehicle according to claim 1, **characterized in that** in step B: if the current vehicle speed V is less than the target cruise speed $V_1$, the intermediate vehicle speed is set as $V_2 = \min[V_1, V + K_1*(V_1-V)]$, wherein $K_1$ is a vehicle speed gradient parameter; and if the current vehicle speed V is greater than the target cruise speed $V_1$, the intermediate vehicle speed is set as $V_2 = \max[V_1, V-K_2*(V_1-V)]$, wherein $K_2$ is a vehicle speed gradient parameter and is equal to or not equal to $K_1$.

3. The cruise control method for an electric vehicle according to claim 1 or 2, **characterized in that** in step B, the final cruise torque is obtained through PID control, which comprises:

   setting a PID initial torque, a PID speed deviation and a PID limit torque, wherein the initial torque and the difference are taken as the PID initial torque and the PID speed deviation, respectively; and
   performing the PID control based on the PID initial torque, the PID speed deviation and the PID limit torque to obtain a cruise torque; and
selecting the larger of the obtained cruise torque and a driver requested torque as the final cruise torque.

4. The cruise control method for an electric vehicle according to claim 3, **characterized in that** the smaller of the driver requested torque and a vehicle coasting load is selected as the PID initial torque, wherein the driver requested torque is obtained according to the current vehicle speed and an accelerator pedal signal, and the vehicle coasting load refers to the load when the vehicle maintains a vehicle propulsion force and a driving resistance to reach a dynamic balance of the vehicle at a preset constant vehicle speed on a straight level road under a windless condition; and/or
the PID limit torque is obtained at the start of the cruise according to a difference between the current vehicle speed V and the target cruise speed $V_1$, and is obtained during the cruise according to the difference between the current vehicle speed V and the target cruise speed $V_1$, a current torque of a motor of the electric vehicle, and the obtained cruise torque.

5. The cruise control method for an electric vehicle according to claim 4, **characterized in that** if the absolute value of the difference between the current vehicle speed V and the target cruise speed $V_1$ is greater than a preset threshold, a corresponding external characteristic torque of the motor is obtained according to an external characteristic curve of the motor of the electric vehicle as the PID limit torque, and that if the absolute value of the difference between the current vehicle speed V and the target cruise speed $V_1$ is less than the preset threshold, the obtained cruise torque is taken as the PID limit torque.

6. The cruise control method for an electric vehicle according to claim 5, **characterized in that** the preset threshold is not greater than 5.

7. The cruise control method for an electric vehicle according to claim 4, **characterized by** further comprising: modifying the PID initial torque and/or the PID limit torque so as to cause same to conform to the characteristics of the motor of the electric vehicle.

8. A cruise control system for an electric vehicle, **characterized by** comprising:

   a first unit configured to receive a cruise start request or a cruise resume request, the cruise start request comprising a target cruise speed $V_1$;
   a second unit configured to: determine whether the vehicle meets set cruise conditions, and if the conditions are met, detect a current vehicle speed V, and set an intermediate vehicle speed $V_2$ that is numerically between the target cruise speed $V_1$ and the current vehicle speed V, then calculate a difference between the current vehicle speed V and the intermediate vehicle speed $V_2$, and obtain a final cruise torque based on the difference and a set initial torque; and

a third unit configured to adjust a motor output torque of the electric vehicle according to the final cruise torque so as to propel the vehicle to cruise.

9.  The cruise control system for an electric vehicle according to claim 8, **characterized in that** the second unit is further configured to: set the intermediate vehicle speed as $V_2 = \min[V_1, V + K_1 {}^*(V_1 - V)]$ if the current vehicle speed V is less than the target cruise speed $V_1$, wherein $K_1$ is a vehicle speed gradient parameter; and set the intermediate vehicle speed as $V_2 = \max[V_1, V - K_2 {}^*(V_1 - V)]$ if the current vehicle speed V is greater than the target cruise speed $V_1$, wherein $K_2$ is a vehicle speed gradient parameter and is equal to or not equal to $K_1$.

10. The cruise control system for an electric vehicle according to claim 8 or 9, **characterized in that** the cruise control system further comprises a PID controller configured to perform PID control to output a cruise torque based on a PID initial torque, a PID speed deviation and a PID limit torque, wherein the initial torque and the difference are taken as the PID initial torque and the PID speed deviation, respectively, and that the second unit is further configured to select the larger of the cruise torque output from the PID controller and a driver requested torque as the final cruise torque.

11. The cruise control system for an electric vehicle according to claim 10, **characterized in that** the smaller of the driver requested torque and a vehicle coasting load is selected as the PID initial torque, wherein the driver requested torque is obtained according to the current vehicle speed and an accelerator pedal signal, and the vehicle coasting load refers to the load when the vehicle maintains a vehicle propulsion force and a driving resistance to reach a dynamic balance of the vehicle at a preset constant vehicle speed on a straight level road under a windless condition; and/or

the PID limit torque is obtained at the start of the cruise according to a difference between the current vehicle speed V and the target cruise speed $V_1$, and is obtained during the cruise according to the difference between the current vehicle speed V and the target cruise speed $V_1$, a current torque of a motor of the electric vehicle, and the obtained cruise torque.

12. The cruise control system for an electric vehicle according to claim 11, **characterized in that** if the absolute value of the difference between the current vehicle speed V and the target cruise speed $V_1$ is greater than a preset threshold, a corresponding external characteristic torque of the motor is obtained according to an external characteristic curve of the motor of the electric vehicle as the PID limit torque, and that if the absolute value of the difference between the current vehicle speed V and the target cruise speed $V_1$ is less than the preset threshold, the obtained cruise torque is taken as the PID limit torque.

13. The cruise control system for an electric vehicle according to claim 8 or 9, **characterized in that** the first unit is a cruise switch, and/or the second unit is a vehicle control unit (VCU), and/or the third unit is a power electronics unit (PEU).

14. A vehicle, **characterized in that** the vehicle is provided with a cruise control system for an electric vehicle as claimed in any one of claims 8-13, the vehicle including pure electric vehicles and hybrid vehicles.

15. A controller comprising a processor and a memory for storing instructions, **characterized in that** when the instructions are executed, the processor implements a cruise control method for an electric vehicle as claimed in any one of claims 1-7.

16. A storage medium for storing instructions, **characterized in that** the instructions, when executed, implement a cruise control method for an electric vehicle as claimed in any one of claims 1-7.

S10

Start

S11

Receive a cruise start request or a cruise resume request

S12

Detect a current vehicle speed V, set an intermediate vehicle speed V2, calculate a difference between V and V2, and obtain a final cruise torque based on the difference and a set initial torque

S13

Adjust a motor output torque according to the final cruise torque

*Fig. 1*

Fig. 2

*Fig. 3*

## INTERNATIONAL SEARCH REPORT

| International application No. |
|---|
| **PCT/CN2018/116101** |

| A. | CLASSIFICATION OF SUBJECT MATTER |
|---|---|

B60W 30/14(2006.01)i;  B60W 10/08(2006.01)i

According to International Patent Classification (IPC) or to both national classification and IPC

| B. | FIELDS SEARCHED |
|---|---|

Minimum documentation searched (classification system followed by classification symbols)

B60W30/+; B60W10/+

Documentation searched other than minimum documentation to the extent that such documents are included in the fields searched

Electronic data base consulted during the international search (name of data base and, where practicable, search terms used)

CNPAT, WPI, EPODOC, CNKI; 蔚来汽车有限公司, 崔挺, 速度, 车速, 中间, 第二, 之间, 中间车速, 巡航, 电机, 电动, 比例积分, PID, speed, torque, electric+, motor, cruise.

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 107187446 A (CH-AUTO TECHNOLOGY CO., LTD.) 22 September 2017 (2017-09-22) description, paragraphs 58-114, and figures 2-4 | 1-16 |
| A | CN 107000756 A (AUDI AG.) 01 August 2017 (2017-08-01) entire document | 1-16 |
| A | CN 104015720 A (HYUNDAI MOTOR COMPANY) 03 September 2014 (2014-09-03) entire document | 1-16 |
| A | CN 103121449 A (BEIQI FOTON MOTOR CO., LTD.) 29 May 2013 (2013-05-29) entire document | 1-16 |
| A | CN 104843002 A (BEIQI FOTON MOTOR CO., LTD.) 19 August 2015 (2015-08-19) entire document | 1-16 |
| A | CN 204506886 U (BEIJING ELECTRIC VEHICLE CO., LTD.) 29 July 2015 (2015-07-29) entire document | 1-16 |
| A | US 2016159352 A1 (HYUNDAI MOTOR CO., LTD.) 09 June 2016 (2016-06-09) entire document | 1-16 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 January 2019** | **18 February 2019** |

| Name and mailing address of the ISA/CN | Authorized officer |
|---|---|
| **State Intellectual Property Office of the P. R. China** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/116101**

| Patent document cited in search report | | | Publication date (day/month/year) | Patent family member(s) | | | Publication date (day/month/year) |
|---|---|---|---|---|---|---|---|
| CN | 107187446 | A | 22 September 2017 | None | | | |
| CN | 107000756 | A | 01 August 2017 | US | 10029684 | B2 | 24 July 2018 |
| | | | | EP | 3245112 | B1 | 19 September 2018 |
| | | | | WO | 2016112945 | A1 | 21 July 2016 |
| | | | | EP | 3245112 | A1 | 22 November 2017 |
| | | | | US | 2018015920 | A1 | 18 January 2018 |
| | | | | DE | 102015000539 | A1 | 21 July 2016 |
| CN | 104015720 | A | 03 September 2014 | US | 2014244083 | A1 | 28 August 2014 |
| | | | | CN | 104015720 | B | 20 March 2018 |
| | | | | KR | 20140108016 | A | 05 September 2014 |
| | | | | US | 9278682 | B2 | 08 March 2016 |
| | | | | KR | 101461888 | B1 | 13 November 2014 |
| | | | | JP | 6193020 | B2 | 06 September 2017 |
| | | | | JP | 2014169065 | A | 18 September 2014 |
| CN | 103121449 | A | 29 May 2013 | CN | 103121449 | B | 18 November 2015 |
| CN | 104843002 | A | 19 August 2015 | CN | 104843002 | B | 08 December 2017 |
| CN | 204506886 | U | 29 July 2015 | None | | | |
| US | 2016159352 | A1 | 09 June 2016 | US | 9815463 | B2 | 14 November 2017 |
| | | | | KR | 20160069197 | A | 16 June 2016 |
| | | | | KR | 101655594 | B1 | 22 September 2016 |

Form PCT/ISA/210 (patent family annex) (January 2015)